# FASCICULE DE BREVET EUROPEEN

(11) **EP 1 275 174 B1**
(45) Date de publication et mention de la délivrance du brevet: **16.06.2004**
(21) Numéro de dépôt: 01907881.5
(22) Date de dépôt: 23.02.2001
(51) Int. Cl.: H01R 13/52, H02G 3/18

(54) **DISPOSITIF ET SYSTEME DE RECOUVREMENT ENCASTRABLES POUR MASQUER UN ACCESSOIRE, NOTAMMENT UNE PRISE ELECTRIQUE, ET APPAREILLAGE ELECTRIQUE S'Y RAPPORTANT**
EINSENKBARES ABDECKUNGSYSTEM ZUR MASKIERUNG EINER VORRICHTUNG, INSBESONDERE FÜR EINE ELEKTRISCHE STECKDOSE, UND ZUGEHÖRIGES ELEKTRISCHES GERÄT
BUILT-IN DEVICE AND SYSTEM FOR MASKING AN ACCESSORY, IN PARTICULAR AN ELECTRICAL CONNECTION AND RELATED ELECTRICAL EQUIPMENT

(30) Priorité: 23.02.2000 FR 0002276
(43) Date de publication de la demande: 15.01.2003
(73) Titulaire: Meljacq, 75015 Paris (FR)
(72) Inventeur: BOUSQUET, André, F-75015 Paris (FR)
(74) Mandataire: Pontet, Bernard
(86) Numéro de dépôt international: PCT/FR2001/000526
(87) Numéro de publication internationale: WO 2001/063703

(56) Documents cités:
- EP-A- 0 743 733
- US-A- 1 467 261
- US-A- 3 794 956
- US-A- 5 800 188

## Description

La présente invention concerne un dispositif de recouvrement encastrable pour masquer un accessoire, notamment électrique, dans une paroi, en particulier un sol de bâtiment. Elle concerne également un système mettant en oeuvre un ensemble de dispositifs de recouvrement encastrables ci-dessus. Elle concerne encore un appareillage électrique comprenant un accessoire électrique équipé d'un tel dispositif ou système de recouvrement.

L'accessoire électrique peut être un connecteur électrique tel qu'une prise de courant, une prise téléphonique, un interrupteur ou encore un bouton poussoir.

On connaît pour les prises téléphoniques un dispositif de recouvrement essentiellement constitué d'une plaque avec en son centre un logement pouvant être obturé par un mince clapet pivotant, globalement en forme de disque. Une prise téléphonique femelle insérée dans le logement permet d'accueillir une prise téléphonique mâle extérieure lorsque le clapet est en position ouverte.

Malgré l'aménagement d'une échancrure dans une partie du bord du logement, la préhension du clapet reste difficile. Cette échancrure permet la pénétration et/ou l'accumulation des salissures.

Un but de la présente invention est de remédier à cet inconvénient en proposant un dispositif de recouvrement doté d'un clapet fiable et facilement manipulable.

On atteint l'objectif précité avec un dispositif de recouvrement encastrable pour masquer un accessoire, notamment électrique, dans une paroi, en particulier un sol de bâtiment. Le dispositif peut comprendre une plaque dans laquelle est formé un logement et un clapet d'obturation du logement. Selon l'invention, le clapet d'obturation porte sur sa face extérieure une anse raccordée au clapet par des moyens de pivotement et escamotable dans un évidement formé le long du bord du clapet. Avec une telle anse, le clapet peut être facilement soulevé à l'aide d'une traction exercée sur cette anse pivotante. En outre la sécurité et l'esthétique du dispositif sont optimisées grâce à l'évidement prévu pour recevoir l'anse.

La face extérieure du clapet peut globalement être de forme circulaire avec une saillie latérale formée par une patte par laquelle le clapet est relié de façon pivotante à la plaque, la patte s'inscrivant dans une échancrure formée dans la plaque.

De préférence, les moyens de pivotement sont disposés aux deux extrémités de l'anse et à deux extrémités correspondantes de l'évidement formé le long du bord du clapet, les deux axes des moyens de pivotement étant parallèles à l'axe de pivot du clapet, l'axe de pivot du clapet et une ligne commune aux deux axes des moyens de pivotement étant disposés de part et d'autre du centre du clapet.

Selon une caractéristique avantageuse de l'invention, les moyens de pivotement de l'anse sont tels qu'en une position d'écartement maximal, l'anse se trouve sensiblement perpendiculaire au clapet.

Avantageusement, l'anse peut comprendre une encoche de manipulation à la jonction entre sa base et son pourtour radialement extérieur.

Selon un mode de réalisation préféré, la plaque présente dans un bord du logement entourant le clapet en position de fermeture une encoche destinée à faciliter la préhension de l'anse. Cette encoche est située de préférence en regard d'une encoche de manipulation prévue sur l'anse et en particulier à la jonction entre la base de l'anse et son pourtour extérieur.

Selon l'invention, pour faciliter la fermeture du clapet, ledit clapet peut comprendre sur sa partie intérieure un contrepoids.

Selon une caractéristique avantageuse de l'invention, le contrepoids est conformé pour s'engager de façon étanche dans le logement.

Avantageusement, le contrepoids comprend un creux pour accueillir un organe électrique saillant, tel qu'une prise de terre, lorsque le clapet est en position d'obturation.

L'invention concerne également un système de recouvrement encastrable pour masquer une pluralité d'accessoires, notamment électriques, dans une paroi, en particulier un sol de bâtiment, comprenant une plaque dans laquelle est formée une pluralité de couples composés chacun d'un logement et d'un clapet d'obturation de logement.

L'invention concerne encore un appareillage électrique encastrable comprenant un accessoire électrique monté dans le logement d'un dispositif ou d'un système de recouvrement tel que décrit ci-dessus.

D'autres avantages et caractéristiques de l'invention apparaîtront à l'examen de la description détaillée d'un mode de mise en oeuvre nullement limitatif, et des dessins annexés sur lesquels :
- la figure 1 est une vue schématique en perspective de l'extérieur du dispositif selon l'invention intégré dans un sol représenté avec arrachement, le clapet étant en position d'obturation et l'anse escamotée;
- la figure 2 est une vue analogue à la figure 1, mais avec le clapet en position d'ouverture partielle et l'anse en position d'écartement permettant de la tirer manuellement pour soulever le clapet;
- la figure 3 est une vue en coupe suivant une ligne médiane et perpendiculaire à l'axe de pivot du clapet;
- la figure 4 est un agrandissement d'une partie de la figure 3 montrant la préhension initiale de l'anse à l'aide d'un doigt;
- la figure 5 est une vue de face d'une plaque intégrant une pluralité de couples logement-clapet pour former un système selon l'invention ;
- la figure 6 est une vue en coupe identique à celle de la figure 3 mais selon un autre mode de mise en oeuvre de l'invention; et
- la figure 7 est une vue de dessus du dispositif sans le clapet selon le mode de mise en oeuvre illustré sur la figure 6.

Bien que l'invention n'y soit pas limitée, on va maintenant décrire un dispositif de recouvrement encastrable pour masquer une prise électrique.

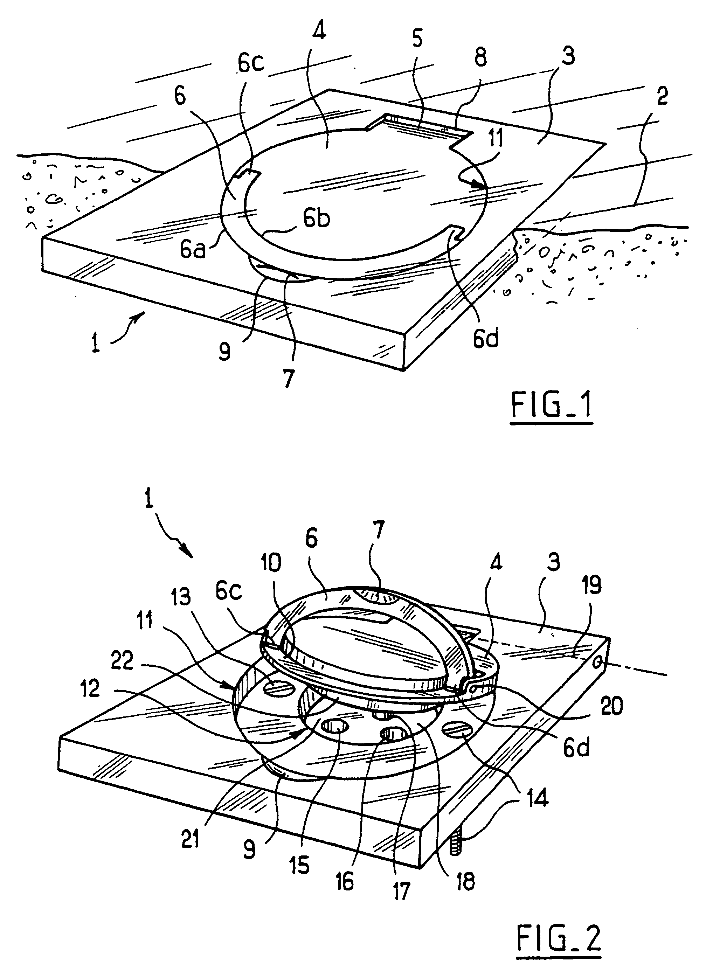

En se référant à la figure 1, on voit un dispositif de recouvrement 1 encastré de sorte que sa surface extérieure affleure un sol 2 qui peut être un sol de bâtiment d'habitation ou de local professionnel tel que bureau ou salle de réunion. Le dispositif de recouvrement comprend une plaque 3, par exemple en inox, de forme parallélépipédique à deux bases carrées. La face extérieure de la plaque comprend en son centre un logement 11 de forme générale circulaire dans lequel est engagé un clapet 4. La face extérieure du clapet présente un contour globalement circulaire avec une saillie rectangulaire 5 formant une patte d'articulation avec la plaque suivant un axe d'articulation 19 parallèle aux côtés avant et arrière de la plaque. Le logement 11 présente une échancrure 8 recevant la patte 5. Le clapet est mobile autour de l'axe 19 entre la position de fermeture représentée à la figure 1, dans laquelle il s'inscrit dans le logement 11 avec sa face extérieure dans le plan de la face extérieure de la plaque 3, et une position d'ouverture représentée à la figure 2 dans laquelle il donne accès au logement 11. Le clapet 4 porte le long de son bord, à l'opposé de la patte 5, une anse en forme d'arc de cercle. Le contour externe 6a de la face extérieure de l'anse est un arc du contour circulaire de la face extérieure du clapet. L'anse présente une encoche de manipulation 7 qui chevauche un bord de jonction entre la base de l'anse 6 et sa face radialement externe. Les extrémités 6c et 6d de l'anse sont conformées en oreilles d'articulation avec le clapet 4 suivant un axe d'articulation 20 parallèle à l'axe 19 d'articulation entre le clapet 4 et la plaque 3. Les axes 19 et 20 sont situés de part et d'autre du centre du clapet 4. L'anse est mobile par rapport au clapet 4 autour de l'axe 20 entre une position escamotée représentée à la figure 1 et une position écartée représentée à la figure 2. Le clapet 4, en forme de cylindre aplati, présente le long de son bord avant, un évidement 10 destiné à accueillir l'anse 6 en position escamotée. Le logement 11 (mieux illustré sur la figure 2) de la plaque 3 comprend en outre une encoche 9 disposée à l'opposé de l'échancrure 8 et faisant face à l'encoche de manipulation 7 lorsque l'anse est en position escamotée. En position fermée, la face extérieure de la plaque 3, la face extérieure de l'anse 6 ainsi que la face extérieure du clapet 4 sont dans un même plan correspondant au plan du sol 2. Il se forme alors une petite cavité entre les encoches 9, 7 et le contour externe 6a afin de faciliter la prise de l'anse 6 pour le soulèvement de l'anse 6 puis, avec elle, du clapet 4 comme cela est illustré sur la figure 2. A part cette petite cavité, la surface du dispositif est sensiblement lisse lorsque le clapet est fermé et l'anse escamotée.

La figure 2 illustre le dispositif de recouvrement 1 au cours d'une manoeuvre d'ouverture, la main tirant l'anse 6 vers le haut n'étant pas représentée. L'anse 6 est délogée de l'évidement 10 et est contenue dans un plan oblique par rapport au clapet. De préférence des moyens de butée sont prévus pour limiter la course de pivotement de l'anse à environ 90°. Ainsi, l'anse retombe d'elle-même en position escamotée lorsque le clapet est en position de fermeture. De tels moyens peuvent consister en une conformation convenable des oreilles 6c, 6d et des extrémités de l'évidement 10. L'anse 6 est en forme de C avec une section rectangulaire et une certaine profondeur supérieure à la moitié de l'épaisseur du clapet 4. L'évidement 10 a une section rectangulaire correspondante.

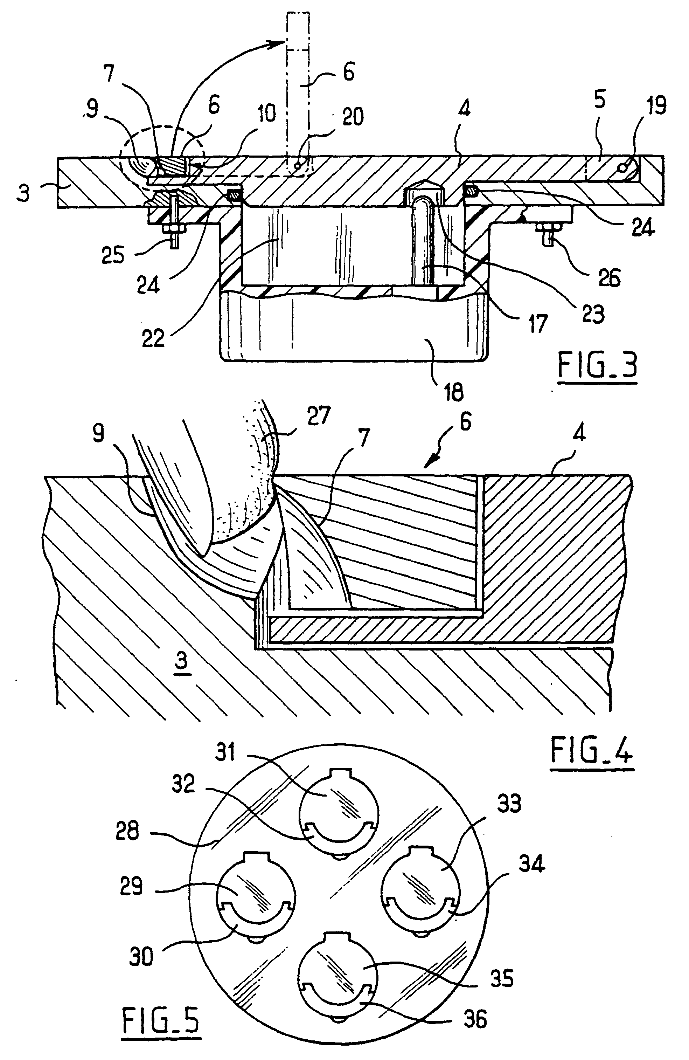

Le soulèvement du clapet 4, de la position fermée à la position ouverte, s'effectue en deux mouvements. D'abord, on introduit l'extrémité d'un doigt dans la cavité réalisée par les encoches 7 et 9 (figure 4). On soulève l'anse 6 comme illustré en trait mixte à la figure 3. Le second mouvement est une traction sur l'anse 6 de façon à faire pivoter le clapet 4 autour de l'axe d'articulation 19. Les axes 19 et 20 sont réalisables grâce des tiges filetées (figure 2)vissées dans la plaque 3 (axe 19) et dans le clapet 4 (axe 20) et dont les extrémités fendues sont affleurantes comme représenté. Ces vis traversent des alésages appropriés de la patte 5 (axe 19) et des oreilles 6c et 6d (axe 20).

Le retour en position d'obturation du clapet 4 est facilité par un contrepoids 22 disposé sur la face intérieure du clapet 4.

Le logement 11 possède une forme générale cylindrique avec un fond traversé par un trou circulaire 12 disposé au centre du logement 11. Le trou 12 débouche à travers la face intérieure de la plaque 3 sur laquelle est fixée, au moyen d'ensembles vis-écrou 25,26 (figure 3) une fiche de courant femelle 18 comprenant deux trous 15, 16 et une prise de terre saillante 17 accessibles dans le logement 11 à travers le trou 12.

Lorsque le clapet est fermé, le contrepoids cylindrique 22 s'emboîte de manière étanche dans le trou 12 garni à cet effet d'un joint d'étanchéité périphérique 24. Un évidement (illustré sur la figure 3) est prévu sur la face frontale du contrepoids 22 afin de recevoir la prise de terre lorsque le clapet est en position d'obturation. Les dimensions du logement 11 et du trou 12 sont telles que l'anse, le clapet et le contrepoids s'y accommodent complémentairement lorsque le dispositif clapet est en position fermée.

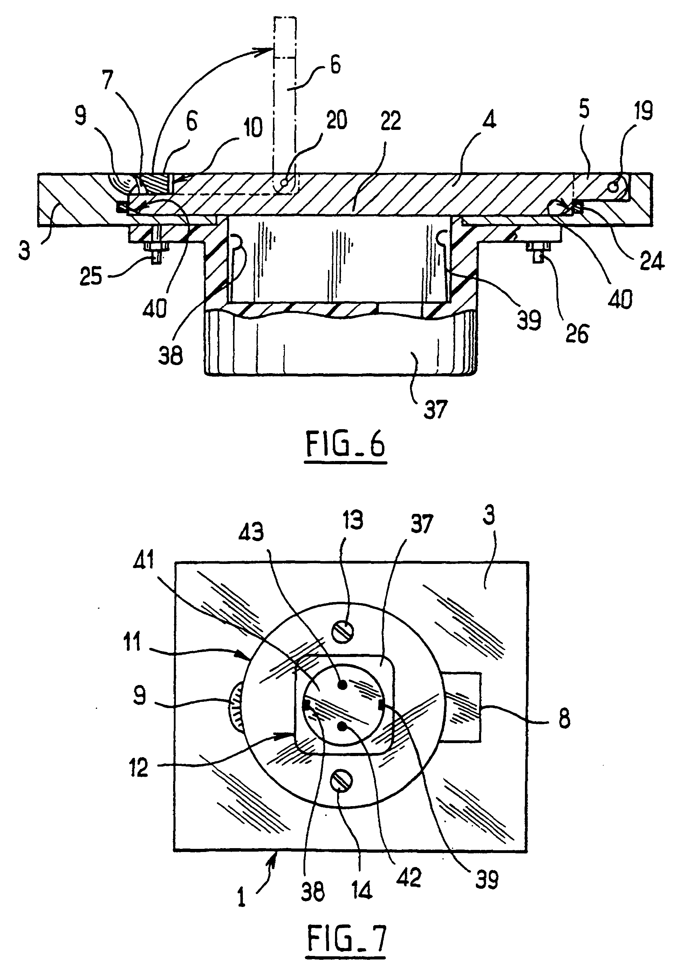

Selon un autre mode de mise en oeuvre selon l'invention, le contrepoids 22 peut être disposé sur toute la surface intérieure du clapet 4 comme on peut le voir sur la figure 6. Lorsque le clapet est fermé, le contrepoids cylindrique 22 s'emboîte de manière étanche dans le logement 11 garni à cet effet d'un joint d'étanchéité périphérique 24. Dans ce mode de mise en oeuvre, également représenté sur la figure 7 sans le clapet 4, le trou 12 peut présenter en vue de dessus une forme sensiblement carrée propre à recevoir une fiche de courant 37 de forme correspondante, notamment du type usité en Allemagne avec deux prises de terre latérales 38 et 39.

On distingue clairement sur la figure 7 différentes formes des éléments essentiels du dispositif. On retrouve le logement 11, de forme circulaire, doté de l'encoche 9 et de l'échancrure 8 diamétralement opposées et réalisées dans la plaque 3. La fiche 37 est positionnée de telle sorte que sa partie supérieure affleure le fond du logement 11. Le fond 41 de cette fiche 37 comprend deux trous 42 et 43 pour recevoir des prises de courant.

Afin de faciliter l'insertion du contrepoids 22 dans le logement 11 ainsi que le contact de ce même contrepoids avec le joint 24, un chamfrein 40 est réalisé sur le pourtour inférieur du contrepoids.

La plaque 3 se fixe au sol 2 au moyen des vis 13 et 14 traversant le fond du logement 11 comme on peut le voir sur les figures 2 et 7.

Sur la figure 5, on voit un système de recouvrement comportant une plaque 28 sur laquelle est disposée une pluralité de clapets 29, 31, 33 et 35 portant chacun une anse respective 30, 32, 34 et 36. Les clapets sont logés dans des logements respectifs hébergeant par exemple une prise de courant, une prise téléphonique et deux interrupteurs. La plaque 28 forme avec chaque clapet et anse associée un dispositif identique à celui décrit en référence aux figures 1 à 4, excepté la forme du contour extérieur de la plaque et le fait que la plaque fait également partie de trois autres dispositifs de recouvrement.

La présente invention fournit donc un dispositif dans lequel le passage d'une position fermée étanche à une position ouverte s'effectue simplement à l'aide d'une anse pivotante escamotable.

Bien sûr, l'invention n'est pas limitée aux exemples qui viennent d'être décrits et de nombreux aménagements peuvent être apportés à ces exemples sans sortir du cadre de l'invention. On peut par exemple fixer à la place de la fiche femelle 18, un interrupteur, un bouton poussoir ou une prise téléphonique. Et d'autres moyens de fixation peuvent bien sûr être utilisés.

## Revendications

1. Dispositif de recouvrement encastrable pour masquer un accessoire (18), notamment électrique, dans une paroi (2), en particulier un sol de bâtiment, comprenant une plaque (3) dans laquelle est formé un logement (11) et un clapet pivotant d'obturation (4) du logement, **caractérisé en ce que** le clapet pivotant d'obturation porte sur sa face extérieure une anse (6) raccordée au clapet par des moyens de pivotement (6c, 6d), et escamotable dans un évidement (10) formé le long du bord du clapet.

2. Dispositif selon la revendication 1, **caractérisé en ce que** la face extérieure du clapet pivotant d'obturation du logement est globalement de forme circulaire avec une saillie latérale (5) formée par une patte par laquelle le clapet est relié de façon pivotante à la plaque (3), la patte s'inscrivant dans une échancrure (8) formée dans la plaque.

3. Dispositif selon la revendication 1 ou 2, **caractérisé en ce que** les moyens de pivotement (6c, 6d) sont disposés aux deux extrémités de l'anse et à deux extrémités correspondantes de l'évidement (10) formé le long du bord du clapet pivotant d'obturation du logement, les deux axes des moyens de pivotement étant parallèles à l'axe de pivot (19) du clapet, l'axe de pivot du clapet et une ligne commune aux deux axes des moyens de pivotement étant disposés de part et d'autre du centre du clapet.

4. Dispositif selon l'une quelconque des revendications précédentes, **caractérisé en ce que** les moyens de pivotement (6c, 6d) de l'anse sont tels qu'en une position d'écartement maximal, l'anse se trouve sensiblement perpendiculaire au clapet pivotant d'obturation du logement.

5. Dispositif selon l'une quelconque des revendications précédentes, **caractérisé en ce que** l'anse comprend une encoche de manipulation (7) à la jonction entre sa base et son pourtour radialement extérieur.

6. Dispositif selon l'une quelconque des revendications 1 à 4, **caractérisé en ce que** la plaque présente dans un bord du logement entourant le clapet pivotant d'obturation du logement en position de fermeture une encoche (9) destinée à faciliter la préhension de l'anse, située de préférence en regard d'une encoche de manipulation (7) prévue sur l'anse et en particulier à la jonction entre la base de l'anse et son pourtour extérieur.

7. Dispositif selon l'une quelconque des revendications precédentes, **caractérisé en ce que** pour faciliter la fermeture du clapet, ledit clapet pivotant d'obturation du logement comprend sur sa partie intérieure un contrepoids (22).

8. Dispositif selon la revendication 7, **caractérisé en ce que** le contrepoids (22) est conformé pour s'engager de façon étanche (24) dans le logement.

9. Dispositif selon la revendication 7 ou 8, **caractérisé en ce que** le contrepoids (22) comprend un creux (23) pour accueillir un organe électrique saillant (17), tel qu'une prise de terre, lorsque le clapet pivotant d'obturation du logement est en position d'obturation.

10. Système de recouvrement encastrable pour masquer une pluralité d'accessoires (18), notamment électriques, dans une paroi (2), en particulier un sol de bâtiment, comprenant une plaque (3) dans laquelle est formée une pluralité, de couples composés chacun d'un logement (11) et d'un clapet pivotant d'obturation (4) de logement selon l'une quelconque des revendications précédentes.

11. Appareillage électrique encastrable comprenant un accessoire électrique monté dans le logement d'un dispositif de recouvrement selon l'une des revendications 1 à 9 ou d'un système de recouvrement selon la revendication 10.

## Patentansprüche

1. Versenkbare Abdeckvorrichtung zur Maskierung eines insbesondere elektrischen Zubehörs (18) in einer Wand (2), insbesondere einem Gebäudeboden, umfassend eine Platte (3), in der eine Aufnahme (11) gebildet ist, und eine verschwenkbare Klappe (4) zum Verschluß der Aufnahme, **dadurch gekennzeichnet, daß** die verschwenkbare Verschlußklappe auf ihrer Außenseite einen Bügel (6) trägt, der mit der Klappe durch Schwenkmittel (6c, 6d) verbunden ist und in eine längs des Rands der Klappe gebildete Aussparung (10) versenkbar ist.

2. Vorrichtung nach Anspruch 1, **dadurch gekennzeichnet, daß** die Außenseite der verschwenkbaren Klappe zum Verschluß der Aufnahme insgesamt kreisförmig ist und einen seitlichen Vorsprung (5) aufweist, der von einem Lappen gebildet ist, über den die Klappe mit der Platte (3) verschwenkbar verbunden ist, wobei der Lappen in einen in der Platte gebildeten Ausschnitt (8) eingeschrieben ist.

3. Vorrichtung nach Anspruch 1 oder 2, **dadurch gekennzeichnet, daß** die Schwenkmittel (6c, 6d) an den beiden Enden des Bügels und an zwei entsprechenden Enden der längs des Rands der verschwenkbaren Klappe zum Verschluß der Aufnahme gebildeten Aussparung (10) angeordnet sind, wobei die beiden Achsen der Schwenkmittel zur Schwenkachse (19) der Klappe parallel sind und wobei die Schwenkachse der Klappe und eine den beiden Achsen der Schwenkmittel gemeinsame Linie zu beiden Seiten des Mittelpunkts der Klappe angeordnet sind.

4. Vorrichtung nach einem der vorhergehenden Ansprüche, **dadurch gekennzeichnet, daß** die Schwenkmittel (6c, 6d) des Bügels so beschaffen sind, daß der Bügel sich in einer Stellung maximaler Entfernung im wesentlichen senkrecht zu der verschwenkbaren Klappe zum Verschluß der Aufnahme befindet.

5. Vorrichtung nach einem der vorhergehenden Ansprüche, **dadurch gekennzeichnet, daß** der Bügel an der Verbindung zwischen seiner Basis und seinem radial äußeren Umfang eine Manipulationskerbe (7) aufweist.

6. Vorrichtung nach einem der Ansprüche 1 bis 4, **dadurch gekennzeichnet, daß** die Platte in einem Rand der Aufnahme, der die verschwenkbare Klappe zum Verschluß der Aufnahme in Verschlußstellung umgibt, eine Kerbe (9) aufweist, die dazu bestimmt ist, das Ergreifen des Bügels zu erleichtern, und vorzugsweise gegenüber einer Manipulationskerbe (7) gelegen ist, die an dem Bügel und insbesondere an der Verbindung zwischen der Basis des Bügels und seinem äußeren Umfang vorgesehen ist.

7. Vorrichtung nach einem der vorhergehenden Ansprüche, **dadurch gekennzeichnet, daß** die verschwenkbare Klappe zum Verschluß der Aufnahme zum Erleichtern der Schließung der Klappe an ihrem inneren Teil ein Gegengewicht (22) aufweist.

8. Vorrichtung nach Anspruch 7, **dadurch gekennzeichnet, daß** das Gegengewicht (22) so ausgebildet ist, daß es in die Aufnahme dicht (24) eintritt.

9. Vorrichtung nach Anspruch 7 oder 8, **dadurch gekennzeichnet, daß** das Gegengewicht (22) eine Vertiefung (23) aufweist, um ein vorstehendes elektrisches Organ (17), wie einen Erdanschluß, aufzunehmen, wenn die verschwenkbare Klappe zum Verschluß der Aufnahme in Verschlußstellung ist.

10. Versenkbares Abdecksystem zum Maskieren einer Vielzahl von insbesondere elektrischen Zubehören (18) in einer Wand (2), insbesondere einem Gebäudeboden, umfassend eine Platte (3), in der eine Vielzahl von Paaren gebildet ist, die jeweils aus einer Aufnahme (11) und einer verschwenkbaren Klappe (4) zum Verschluß der Aufnahme nach einem der vorhergehenden Ansprüche bestehen.

11. Versenkbares elektrisches Gerät, das ein elektrisches Zubehör aufweist, das in der Aufnahme einer Abdeckvorrichtung nach einem der Ansprüche 1 bis 9 oder eines Abdecksystems nach Anspruch 10 montiert ist.

## Claims

1. A flush-mounting covering device for concealing an accessory (18), especially an electrical accessory, in a surface (2), in particular a floor of a building, comprising a plate (3) in which a housing (11) is formed, and a pivoting flap (4) for closing the housing, **characterized in that** the closing flap has on its external surface a handle (6) that is connected to the flap by pivoting means (6c, 6d), and can be retracted in a recess (10) formed along the edge of the flap.

2. A device according to Claim 1, **characterized in that** the external surface of the pivoting flap for closing the housing is of generally circular shape with a lateral projection (5) formed by a lug by which the flap pivots on plate (3), the lug fitting in an indentation (8) formed in the plate.

3. A device according to Claim 1 or 2, **characterized in that** the pivoting means (6c, 6d) are arranged at the two ends of the handle and at two corresponding ends of recess (10) formed along the edge of the flap, the two axes of the pivoting means being parallel to the pivoting axis (19) of the pivoting flap for closing the housing, the pivoting axis of the flap and a line common to the two axes of the pivoting means being arranged on either side of the centre of the flap.

4. A device according to any one of the preceding claims, **characterized in that** the pivoting means (6c, 6d) of the handle are such that in a position of maximum extension, the handle is roughly perpendicular to the pivoting flap for closing the housing.

5. A device according to any one of the preceding claims, **characterized in that** the handle has a manipulating recess (7) at the junction between its base and its radially external periphery.

6. A device according to any one of Claims 1 to 4, **characterized in that** the plate has, in one edge of the housing which surrounds the pivoting flap for closing the housing in the closed position, a recess (9) that is intended to make it easier to grasp the handle, said recess being preferably located opposite a manipulating recess (7) provided on the handle and in particular at the junction between the base of the handle and its external periphery.

7. A device according to any one of the preceding claims, **characterized in that**, to facilitate closing of the flap, the said pivoting flap for closing the housing has a counterweight (22) on its inside.

8. A device according to Claim 7, **characterized in that** the counterweight (22) is configured so as to fit snugly (24) in the housing.

9. A device according to Claim 7 or 8, **characterized in that** the counterweight (22) has a hollow (23) for receiving a projecting electrical component (17), such as an earth connection, when the pivoting flap for closing the housing is in the closing position.

10. A flush-mounting covering system for concealing a number of accessories (18), especially electrical accessories, in a surface (2) , in particular a floor of a building, comprising a plate (3) in which several pairs are formed, each comprising a housing (11) and a pivoting flap (4) for closing the housing, according to any one of the preceding claims.

11. Flush-mounting electrical equipment comprising an electrical accessory mounted in the housing of a covering device according to one of the Claims 1 to 9 or of a covering system according to Claim 10.
